# EUROPEAN PATENT SPECIFICATION

(11) **EP 3 295 793 B1**
(45) Date of publication and mention of the grant of the patent: **30.12.2020**
(21) Application number: 17191179.5
(22) Date of filing: 14.09.2017
(51) Int. Cl.: A01N 25/00, A01N 43/16

(54) **ENVIRONMENTALLY COMPATIBLE DEGRADABLE RODENTICIDE FORMULATIONS**
UMWELTVERTRÄGLICHE ABBAUBARE RODENTIZID-FORMULIERUNGEN
FORMULATIONS DE RODENTICIDES DÉGRADABLES COMPATIBLES AVEC L'ENVIRONNEMENT

(30) Priority: 16.09.2016 IT 201600093280
(43) Date of publication of application: 21.03.2018
(73) Proprietor: Dr. Tezza S.r.l., 37050 Angiari (Verona) (IT)
(72) Inventor: Tezza, Pierluigi, 37050 Angiari (Verona) (IT); De Giovannini, Roberto, 64021 Giulianova (Teramo) (IT); Cellinese, Francesco, 64032 Atri (Teramo) (IT)
(74) Representative: Petruzziello, Aldo

(56) References cited:
- EP-A1- 2 497 362
- EP-A2- 0 372 796
- EP-A2- 2 742 801
- WO-A1-03/094612
- WO-A2-2009/047175
- GB-A- 983 065
- GB-A- 2 114 443
- .: "Review report for the active substance warfarin", , 23 September 2005 (2005-09-23), pages 1-32, XP055525071, Retrieved from the Internet: URL:www.furs.si/law/eu/ffs/eng/annexI/dire ktive/RR/warfarin.doc [retrieved on 2018-11-20]
- .: "Rodenticides: entries 96 (brodifacoum), 98 (bromadiolone), 187 (coumatetralyl), 265 (difenacoum), 268 (difethialone), 902 (warfarin)" In: "The pesticide manual : a world compendium", 1 January 2009 (2009-01-01), British Crop Protection Council,, Alton, Hampshire, XP055525108, ISBN: 978-1-901396-18-8 pages 1-14,

## Description

The present invention relates to an eco-compatible biocidal composition able to degrade in a short time in the surrounding environment wherein the disinfestation treatments are carried out, so as to avoid the prolonged persistence of the active ingredient in said environments.

More particularly the present invention relates to a formulation of rodenticide bait for the control of infestant rodents, effective on at least one infestant animal, wherein at least one active ingredient of the class of anticoagulants loses its action by means of a degradation pre-established from bringing into use, and therefore in a short time, thanks to the action of the environmental conditions.

Many undesirable infestant species can populate, occasionally or routinely, zones inhabited or visited by humans, with serious risks for their health. These infestant animals are, in fact, often the vehicle for diseases and parasites which can be transmitted to humans, via direct contact with them or with their organic products (for example faeces, blood, saliva).

In the fight against infestant species, in particular mammals belonging to the family of murinae, and in order to keep these species under control, appropriate disinfestation techniques are adopted.

The most common systems of disinfestation use mechanical, electronic or chemical means.

The chemical methods, which are the most widespread, exploit the attracting effect due to the ingestion of poisoned baits. These formulations with rodenticidal action are available on the market in the form of paste, the so-called fresh paste, pellets, paraffin blocks, gel, microcaps, caps and the like and are mainly constituted by edible materials.

The most widespread active ingredients with rodenticidal action are coumarin derivatives, with anticoagulant action, which can be subdivided into two subgroups - derivatives of first and second generation.

EP 0372796 discloses formulations for rodenticide baits. These comprise a coumarin selected from brodifacoum, difenacoum or bromodialone in a liquid carrier, a solid matrix, such as ground sugar powder, kaolin and wheat flour.

Rodenticide active ingredients are known as indirect anticoagulants in that they do not block directly the cascade of coagulation but inhibit upstream the formation of the vitamin K-dependent coagulation factors, and therefore jeopardise the reactivation of the vitamin K1, indirectly affecting the physiological coagulation of blood.

The anticoagulant molecules classified as "first generation" are warfarin, chlorophacinone, coumatetralyl. The so-called "second generation" ones are bromadiolone, difenacoum, brodifacoum, difethialone.

The second-generation anticoagulant molecules, in particular brodifacoum, bromadiolone, difenacoum e difethialone, are liposoluble and fairly stable and persistent both in the environment and in the target and non-target organism. Brodifacoum is thermally stable up to 50°C, while it resists for 30 days if exposed to direct light. It is easily degraded by light when in diluted solution. The molecule undergoes aerobic degradation and in conditions of flooding of the soil between pH 5.5 and 8.

Bromadiolone is easily degraded in diluted solutions exposed to direct light. Moreover the presence of acidity and water increase the rate of degradation and it is one of the most labile active ingredients.

Difenacoum is stable at pH=5, it has a DT50 (half life time of the product) of 1000 days at pH=7 and a DT50 of 80 days at pH=9. In aqueous solution it undergoes photolysis and according to the pH changes the half life time: the DT50 is 0.14 days at pH=5, 0.34 days at pH=7 and 0.30 days at pH=9.

The difethialone binds strongly to the soil, hydrolyses at 25°C with the following times: at pH 5 DT50 > 1 year, at pH 7 DT50=175 days, at pH 9 DT50=155 days. As regards photolytic degradation studies with sunlight at 28-35°C show DT50 (pH 5) = 59.7 min; DT50 (pH 7) = 61.9 min; DT50 (pH 9) = 54.5 min; while studies with artificial light at 20°C show a DT50 (pH 7) = 23.4 min.

Ready-for-use rodenticides based on these anticoagulant molecules exhibit various critical factors and disadvantages:
- primary toxicity or toxicity towards non-target species: although effective, rodenticides based on this mechanism of action are not species-selective but perform the same mechanism on many animal species. This represents a danger for domestic animals or pets (dogs, cats, etc.) which accidentally swallow the bait intended for the rodents and, potentially, also for humans. The non-target animal species which may come into contact with these substances undergo the same effects of the infestant species to which the treatments are intended. Anticoagulants are toxic for all vertebrates.
- Secondary and tertiary toxicity: should other predatory animals feed on mice or rats, phenomena of "secondary poisoning" could occur. Poisoning is tertiary when the species, in particular necrophagous animals, feed on the carcasses of animals that died through intoxication.
- Bioaccumulation: in toxicology bioaccumulation or biological accumulation is the process through which persistent toxic substances (for example DDT, dioxins or furans) accumulate within an organism, in concentrations greater than those found in the surrounding environment. This accumulation may take place via any route: inhaling, ingestion or simple contact, in relation to the properties of the substances. On the basis of their chemical property of lipophilicity the anticoagulants are bioaccumulative molecules and therefore very persistent in the environment.

The second-generation rodenticides are much more powerful than those of the first generation, they have a greater affinity for sites of binding in the liver and consequently greater accumulation and persistence. - Stability: in normal conditions of use some anticoagulant molecules are highly stable and persistent in the environments in which the disinfestation treatments are performed.

The object of the present invention is that of overcoming, at least in part, the disadvantages of the prior art by providing a formulation with a base of indirect anticoagulants, having such a composition as to avoid the problems listed above of the formulations currently available commercially, in particular by providing such a formulation as to exhibit at least a decreasing content of the active ingredient, in particular a programmed degradation of the active ingredient, so as to limit its concentration in the environment, preferably to limit its persistence in the environment, preferably having a persistence less than three weeks from bringing into use.

Another object of the present invention is that of providing a bait which exhibits one or more of the following properties, preferably the combination thereof:
- low, if not even zero, persistence of the rodenticide active ingredient in the areas in which the disinfestation treatments are carried out;
- low, if not even zero, bioaccumulation of the rodenticide active ingredient;
- low, if not even zero, secondary and tertiary toxicity;
- low, if not even zero, toxicity towards non-target species.

A further object of the present invention is that of providing a formulation for bait which is ethically advantageous in respecting the food intended for humans, which does not foresee therefore the use of raw materials intended for food use such as animal or vegetal fats and flours.

These objects are achieved by the formulation according to the invention having the features listed in the annexed independent claim 1.

Advantageous embodiments of the invention are disclosed by the dependent claims.

An object of the present invention relates to a formulation of rodenticide bait having pre-established and controlled degradation of the active ingredient content in accordance with defined times in such a way as to have a persistence less than three weeks from bringing into use, said formulation comprising
- at least one coumarins or thiocoumarins-based ACTIVE INGREDIENT (A), dissolved in at least one carrier solvent, preferably a palatable one,
- a SOLID MATRIX (B) comprising at least one palatable substance;
- at least one solid organic ACID (C) soluble in water, able to increase the concentration of H+ ions when the water, in any form, comes into contact with said formulation;
- a solid BASIC SUBSTANCE (D), capable of developing compound of an acid nature when water, in any form, enters into contact with said formulation containing said acid (C), so as to create an acidic environment to promote the controlled decomposition of at least said active ingredient (A) in a time shorter than three weeks after bringing into use;
   and optionally
- one or more CO-FORMULANTS,
wherein said basic substances (D) are calcium carbonate, sodium bicarbonate, sodium carbonate, potassium carbonate and potassium bicarbonate, able to generate CO2, wherein the quantities of acid (C) and of basic substance (D) are chosen so as to reach the value of acidity in which the active ingredient (A) decomposes completely; said formulation further comprising one or more hygroscopic substances, preferably calcium hydroxide and calcium chloride.

The present formulation exhibits a degradation of the active ingredient (A) pre-established, in a short time, from bringing into use, generally shorter than six weeks, preferably shorter than three weeks, thanks to the combination of its ingredients as will be illustrated here below in detail.

The formulation according to the invention can be in the form of tablet, effervescent tablet, also multilayered, or in pellets or fresh paste.

Particularly preferred is the abovementioned formulation in the form of tablet or effervescent tablet in that mainly constituted by materials suitable for obtaining a solid form, which does not include raw materials intended for food use such as animal or vegetable fats and flours, so as to be an ethically advantageous bait in respect of human food.

In the formulation according to the present invention, the biocidal action is performed by one or more active ingredients (A) which behave as anticoagulants: the anticoagulants (A) act by inhibiting upstream the formation of the vitamin K-dependent coagulation factors. The complete action of these molecules is achieved after some days from the start of administration. Rodents and the species that are the object of control of infestant animals are particularly neophobic animals. This delay in the anticoagulant action is particularly useful as regards the neophobia of the target species.

On the basis of the new regulatory provisions on the subject of classification and labelling of hazardous chemical substances, and by virtue of the provisions of regulations on the subject of biocides, the content of active anticoagulant molecule (A) in the present composition (in particular as regards the products with base of brodifacoum, bromadiolone and difenacoum) has to be
- equal to or less than 0.003% of the entire formulation, so that these products can be used by amateur users,
- lower, equal to or higher than 30ppm, that is equal to the concentration of active ingredient currently in use in the formulations with rodenticidal action, in particular equal to 50 parts per million in the case of professional users.

Particularly preferred as active ingredients (A) are coumarins-based or thiocoumarins-based anticoagulants, in particular brodifacoum, bromadiolone, difenacoum and difethialone.

Given the highly hazardous nature of the molecules with anticoagulant activity, the active ingredients (A) are used, as mentioned, dissolved in a vehicle substance which has the function of dissolving the active ingredient (solvent) so as to use a liquid preparation or solution.

Said liquid preparation or solution of active ingredient (A) also allows the adsorption of (A) on the solid matrix (B). In this respect the use of at least one solvent wherein the active molecules (A) are soluble is necessary, in particular in the case wherein these are solid.

Examples of solvents commonly used in the dissolving of anticoagulant active ingredients (A), such as those preferred indicated above, are monopropylene glycol and polyethylene glycols (PEG) or mixtures thereof.

Generally, the quantity of solvent with respect to the final composition is below 5% by weight, even if this is not binding for the purpose of the present invention in that the quantity of solvent in the final composition depends on the concentration of the starting liquid preparation of the chosen rodenticide active ingredient.

It should be noted that the abovementioned liquid preparations of anticoagulant active ingredients (A) contain approximately 0.25% of active ingredient and can contain or be added with other optional additives such as, for example, emulsifying agents of the active ingredient (A), pH stabilising agents, sequestering agents.

As example of emulsifying agent of the active ingredient (A) in the solvent mention can be made of triethanolamine (TEA) used generally in quantities comprised between 0.1 - 1% by weight with respect to the weight of the final formulation.

As example of the abovementioned pH stabilising agent, mention can be made of sodium citrate: the use of a pH stabilising agent is advantageous in order to maintain the pH of the liquid preparation in basic conditions, for example in the range of pH = 8-9, so as to avoid the premature decomposition of the active ingredient (A) before use. Generally said pH stabilising agent is present in quantities equal to or lower than 5% by weight with respect to the final composition.

As example of sequestering agent mention can be made of EDTA and also sequestering agents normally used in detergency such as for example phosphates, nitrilotriacetic acid, etc.

The abovementioned solid matrix (B) is generally formed by one or more solid substances. This solid matrix (B) mainly has the function of adsorbing the active ingredients (A) and the other substances dissolved/dispersed in the solvent: this action can be performed, advantageously, by adsorbent substances with a high value of surface area and porosity.

Among these adsorbent substances with high surface area amorphous silica is preferred in that able to absorb liquid substances up to five times its weight. It is therefore found to be suitable for absorbing the active ingredients in solution.

Other similar substances are bentonites, zeolites, kaolin, talc, and natural derivatives such as cellulose and maltodextrins.

In the solid matrix (B) of the present formulation there is in any case always present at least one attracting substance which makes the preparation palatable from an organoleptic viewpoint, for example starch, milk powder, various sugars, powdered fruit or vegetables, powders of ginger, turmeric, cocoa bean that also increase the stimulation of swallowing, wheat flour, wheat, mannitol, lactose.

The total quantity of palatable ingredients is generally at least comprised between 10 and 20% by weight of the total composition, said quantity being rivable also to be greater in the compositions in the form of pellets or fresh paste, without thereby departing from the object of the present invention.

The abovementioned solid matrix (B) preferably has such a consistency as to be able to be processed, for example extruded producing pellets, or such as to be able to be compressed, according to the end use: therefore said solid matrix (B) can contain also, advantageously, a solid substance (filler) which is also able to make said formulation processable in terms of fluidity, in particular in the case of solid formulation such as, for example, silica, talc, starch, for example cornstarch, calcium silicate, cellulose, magnesium carbonate, magnesium oxide, magnesium silicate, lactose.

It should be noted that in the matrix (B) mannitol can also be included in order to confer a greater hardness to the composition, as well as give a sensation of freshness (due to the negative dissolving heat) which makes it well accepted by the rodent.

As mentioned, the formulation according to the present invention contains at least one acid (C) able to generate H+ ions when the water, in any form, comes into contact with the formulation, increasing the concentration of said H+ ions. The acid substances used for this purpose are, preferably, citric, malic, tartaric, adipic, fumaric acid even if other substances can be provided, capable of generating an acid environment able to degrade the active ingredients.

The basic substances (D) capable of developing substances of a preferably acid nature when the water, in any form, comes into contact with the formulation containing the acid (C), are advantageously sodium bicarbonate, sodium carbonate, potassium carbonate and potassium bicarbonate able to generate CO2, even if other basic substances can be used which, in contact with the acid, determine the development of CO2 such as for example calcium carbonate.

It should be noted that the use of (C) in combination with (D) means that, in the presence of water in the environment of use, there is an acid pH so as to lead to the decomposition of the active ingredient (A) and optionally also to the degradation of the solid physical form of the bait in terms of lamination, peeling and disaggregation in the case of formulation in tablet or pellets.

In this way it is possible to obtain a programmed and controlled degradation of the active ingredient by means of simple absorption of humidity and/or variation of the pH (from basic to acid), therefore limiting the persistence of the active ingredient in the environments in which the disinfestation treatments are carried out.

Therefore, the bio-availability of the poison (A) comes to be very low because the poison degrades when the bait remains for a long time exposed in a humid environment.

In practice the degradation of the active ingredient (A) is programmed in accordance with defined times in such a way as to have a low persistence in the environment, preferably less than three weeks from bringing into use, all this regulated by the different proportions of the components of the formulation as above.

In particular the quantities of acid (C) and of basic substance (D) are chosen so as to reach the value of acidity in which the active ingredient (A) chosen decomposes completely, preferably choosing chemical species (C) and (D) able to create effervescence, through reaction of absorption of water and humidity so that the acid pH resulting degrades the active ingredient (A) chosen.

In fact, the humidity which comes into contact with the composition triggers the process of effervescence in the formulation in tablet form and determines the introduction of an environment and of conditions of pH, generally with pH lower than or equal to 6, suitable for the degradation of the active ingredient (A).

According to the active ingredient (A), the composition is formulated in such a way as to modify the rate of degradation of the active ingredient (A) in acid environment, adding an appropriate quantity of calcium chloride or other hygroscopic substances, such as for example calcium hydroxide, in order to remove water from the mechanism of degradation of the active ingredient indicated above and/or to encourage the absorption of humidity. Generally, the quantity of these substances is lower than or equal to 5% by weight with respect to the final formulation.

As mentioned above, the formulation can also contain one or more additional co-formulants as will be described in detail here below.

For example, the present formulation can provide, as single co-formulant or as one of the co-formulants, the use of at least one substance (E) which allows a more effective absorption of at least one of the anticoagulant active ingredients (A) present in the formulation.

Said substance (E) is used to make the rodenticide bait more effective in that it is a substance which facilitates the passage of at least one anticoagulant compound (A) in the blood circulation of the rodent, thus making the use possible of smaller quantities of active ingredient in the formulation.

A smaller quantity of active ingredient in the formulation is advantageous in order to reduce the secondary and tertiary toxicity with respect to known formulations.

This substance (E) which allows a more effective absorption of at least one of the anticoagulant compounds was chosen among natural or artificial substances able to increase the efficiency of absorption of the active substances in the blood circulation, such as for example soy lecithin which is able to limit considerably the activity of enzymes of the acyltransferase type as well as be advantageously also an emulsifying agent.

The present formulation can also contain, as single co-formulant or as one of the co-formulants, at least one substance (F) able to inhibit and slow down, advantageously, the degradation of the active substance inside the host organism, in particular a substance which prevents or slows down the hepatic metabolism of the molecules of active ingredient or anticoagulant, so as to increase the efficacy of the formulation, enabling the use of smaller quantities of active ingredient.

Among the natural substances able to inhibit hepatic metabolism, for example, piperine is a molecule suitable for this purpose. Other similar substances are apigenin, bergamottin and others.

A concentration of piperine which allows this effect is 20 mg/kg in the blood of the target animal.

In a preferred embodiment according to the present invention the formulation provides for the use of the ingredient (E) described above in combination with the ingredient (F) in addition to the ingredients from (A) to (D) described above.

The composition may moreover contain at least one lubricating substance (G) able to make workable the formulation and among the lubricants the one used in the vast majority of cases is magnesium stearate, generally present in quantities smaller than 1%, which can periodically be replaced by stearic acid, sodium stearyl fumarate or hydrogenated vegetable oils, synthetic or vegetable waxes.

In an embodiment of the composition according to the present invention there is (% by weight with respect to the final composition):
one or more ACTIVE INGREDIENTS (A) in a total quantity smaller than or equal to 0.005%;
one or more organic ACIDS (C) in a total quantity smaller than or equal to 25%;
one or more BASIC SUBSTANCES (D) in a total quantity smaller than or equal to 20%;
one or more hygroscopic substances;
and optionally
one or more substances (E) in a total quantity equal to or less than 2%;
one or more substances (F) in a total quantity equal to or less than 1%,
where the abovementioned SOLID MATRIX (B) constitutes the part remaining to 100% by weight.

Other co-formulants which, optionally, can be incorporated in the present formulation are (% by weight with respect to the final formulation)
- BINDERS such as carboxymethyl cellulose, calcium carbonate, calcium sulfate, fats, generally in quantities equal to or less than 10% by weight for formulations in tablets and pellets, or in quantities equal to or lower than 30% for paste formulations;
- bittering substances apt to prevent accidental ingestion by humans, in particular by children. In this respect molecules already intended for this purpose can be used such as for example denatonium benzoate or denatonium saccharate. These substances are not in general perceived by the palate of rodents up to concentrations of the order of that used in the present formulation, generally in quantities comprised between 0.001 - 0.02% by weight;
- dyes, including visible or ultraviolet ones, so that the rodent can locate the bait in half darkness, as well as be able to make their excrements detectable with appropriate apparatuses and also titanium oxide so as to make the bait shiny, generally present in quantities comprised between 0.01 - 0.5% by weight;
- Antioxidants such as BHT, BHA or mixtures thereof, in quantities preferably comprised between 0.01-0.5% by weight;
- emulsifying agents such as sodium isopropyl naphthalene sulfonate, sodium alkyl sulfate;
- preservatives against fungi, yeasts, bacteria, and the like, such as, for example, sorbic acid and bronopol, in quantities generally comprised between 0.01 - 0.5% by weight;
- flavour substances, in quantities preferably comprised between 0.01 - 0.5%;
- repellent agents for the other species.

Among the formulations able to guarantee the required degradation effect, the preferred one is in the form of tablet or effervescent tablet for the reasons stated above.

Moreover, the hardness of the tablet means the formulation according to the present invention can be gnawed and is therefore particularly appealing to the rodent.

It is also possible to provide a multilayered tablet according to the invention where the central core contains a second active ingredient, preferably a first-generation anticoagulant in the central core, and a second generation one in the outer layer or both second generation ones, in different percentages in the two layers.

Examples of preferred compositions are the following, where the preferred ranges (concentration ranges) given here for each ingredient also apply in the case of other substances mentioned above having the same function and therefore belonging to the same class.

### Composition 1 (tablet) (not covered by claims)

| **Ingredient** | **Function** | **Concentration range** | **Concentration** |
|---|---|---|---|
| **Brodifacoum** | Active ingredient | <0.12% to 2.5% if solution <0.003% pure, for amateur use 0.005% pure, for professional use | 0.0025% |
| **Triethanolamine** | Active ingredient emulsifying agent | 0.01-0.05% | 0.04% |
| **PEG 200** | Active ingredient solvent | 0.02-0.06% | 0.0575% |
| **Denatonium benzoate** | Bittering substance | 0.02% to 5% | 0.001% |
| **Propylene glycol** | Bittering solvent | 0.01-0.02% | 0.019% |
| **Powdered cocoabean** | Flavouring substance | 0.1-0.5% | 0.1% |
| **Piperine** | Hepatic metabolism inhibitor | 0.001-0.01% | 0.005% |
| **Calcium Carbonate** | Effervescent/binder substance | 5-10% | 10% |
| **Citric Acid** | Effervescent substance | 7.5-15% | 15% |
| **Adipic Acid** | Effervescent substance | 3.75-7.5% | 7.5% |
| **Magnesium stearate** | Lubricant | 0.1-0.5% | 0.5% |
| **Talc** | Lubricant/filler | 1-5% | 2.5% |
| **Soy lecithin** | Emulsifying agent | 0.5-1.5% | 1.2% |
| **Sodium isopropyl naphthalene sulfonate** | Emulsifier | 0.1-0.2% | 0.2% |
| **Sodium alkyl sulfate** | Emulsifying agent | 0.2-0.5% | 0.5% |
| **Cornstarch** | Filler | 5-15% | 10% |
| **Cellulose** | Filler/Absorbent | 30-50% | 50% |
| **Lactose** | Filler | q.s. to 100% | 2.375% |

### Composition 2 (pellet)

| **Ingredient** | **Function** | **Concentration range** | **Concentration** |
|---|---|---|---|
| **Brodifacoum** | Active ingredient | <0.12% to 2.5% if solution | 0.0025% |
| | | <0.003% pure, for amateur use 0.005% pure, for professional use | |
| **Triethanolamine** | Emulsifying agent | 0.01-0.05% | 0.0400% |
| **PEG 200** | Solvent | 0.15% | 0.0575% |
| **Denatonium benzoate** | Bittering substance | 0.001% pure | 0.001% |
| **Propylene glycol** | Solvent | | 0.019% |
| **Piperine/Apigenin** | Hepatic metabolism inhibitor | 0.001-0.01% | 0.005% |
| **Soy lecithin** | Emulsifying agent | 0.5-1.5% | 1.2% |
| **Calcium Carbonate** | Binder/Effervescent | 1-5% | 5% |
| **Citric Acid** | Acidifier | 5-10% | 10% |
| **Calcium Sulfate** | Binder | 1-5% | 3% |
| **Carboxymethyl cellulose** | Binder | 1-5% | 2% |
| **Sorbic acid** | Preservative | | 0.05% |
| **Bronopol** | Preservative | | 0.05% |
| **Sugar** | Attracting agent | 1-5% | 2.5% |
| **Colorant** | Pigment | 0.05-0.15% | 0.08% |
| **Flavour substance** | | 0.05-0.2% | 0.1% |
| **Wheat flour** | Attracting agent | 30-50% | 50% |
| **Wheat** | Attracting agent | q.s. to 100% | 25.895% |

### Composition 3 (fresh paste) (not covered by claims)

| **Ingredient** | **Function** | **Concentration range** | **Concentration** |
|---|---|---|---|
| **Brodifacoum** | Active ingredient (a.i.) | <0.12% to 2.5% if solution | 0.0025% |
| | | <0.003% pure, for amateur use 0.005% pure, for professional use | |
| **Triethanolamine** | Emulsifying agent of a.i. | 0.01-0.05% | 0.040% |
| **Polyethylene glycol** | Active ingredient solvent | 0.15% | 0.0575% |
| **Denatonium benzoate** | Bittering substance | 0.02% to 5% 0.001% pure | 0.001% |
| **Propylene glycol** | Bittering solvent | | 0.019% |
| **EDTA** | Chelating agent | 0.1-0.5% | 0.4% |
| **Piperine/Apigenin** | Hepatic metabolism inhibitor | 0.001-0.01% | 0.005% |
| **Soy lecithin** | Emulsifying agent | 0.5-1.5% | 1.2% |
| **Sodium Citrate** | Acidity stabilising agent | 1-5% | 3.2% |
| **Calcium Hydroxide** | Stabilising agent | | 0.375% |
| **BHT** | Antioxidant | | 0.016% |
| **BHA** | Antioxidant | | 0.016% |
| **Sorbic acid** | Preservative | | 0.1% |
| **Bronopol** | Preservative | | 0.05% |
| **Sugar** | Attracting agent | 1-5% | 1% |
| **Powder milk** | Attracting agent | 1-5% | 1% |
| **Colorant** | Attracting agent | 0.01-0.05% | 0.03% |
| **Flavour substance** | Attracting agent | 0.05-0.2% | 0.1% |
| **Fats** | Binder | 25-30% | 28.5% |
| **Wheat flour** | Attracting agent | q.s. to 100% | 68.693% |

One of the possible methods of preparation of the formulation according to the present invention is that of mixing, when stirring, first the solid powder ingredients intended to form the solid matrix (B) and subsequently add the liquid/semisolid ingredients including the liquid preparation containing the active ingredient (A) and optionally the other minor ingredients of the composition, until obtaining a homogeneous mixture having the consistency of paste or a greater consistency in the case of pellets or tablets, transferring then the mass obtained in this way into an appropriate machine such as an extruder or tablet making machine (for the tablets) according to the end product to be obtained.

Since the solvents in which the anticoagulant active ingredients are dissolved are solvents of many other molecules, it is preferable to add to the liquid preparation containing the active ingredient the other solid co-formulants should these be provided in small quantities (minor ingredients) such as for example the bittering agents.

The following are some examples illustrating the present invention.

### EXAMPLE 1

A composition is chosen, suitable for the production of tablets containing active ingredient at 0.0025%, composed in this way (% by weight with respect to the total weight of the composition)

| | |
|---|---|
| BRODIFACOUM 2.5% | 0.1% |
| CHOCOLATE FLAVOR | 0.1% |
| BITREX 5% | 0.02% |
| TALC | 3% |
| SILICA | 3% |
| STARCH | 10.0% |
| CITRIC ACID | 17% |
| SODIUM BICARBONATE | 14% |
| LACTOSE | 3% |
| CELLULOSE | 49.78% |

Four portions of this powder are then prepared and mixed in different proportions with calcium chloride in order to evaluate the stability of the active ingredient in conditions of humidity absorption:
- Sample A: 15 grams of powder constituted for 95% by the initial formulation with 5% of calcium chloride. The mixture is stirred energetically in the vessel with cap;
- Sample B: 15 grams of powder constituted for 90% by the initial formulation with 10% of calcium chloride.
- Sample C: 15 grams of powder constituted for 85% by the initial formulation with 15% of calcium chloride.
- Sample D: 15 grams of the initial formulation without the addition of calcium chloride (not according to the invention).

Each sample is placed in a dark glass vessel so as to exclude photodegradation.

The mixtures are stirred energetically in the vessel with cap. The vessel is left open to allow the humidity of the air to enter the vessel and come into contact with the formulation. Analyses are performed to control the titre of the active ingredient at regular time intervals.

Before every analysis the powder mixture is stirred energetically to even out the distribution of the ingredients and exclude possible unevenness. The analyses of the titre of the active ingredient were performed via HLPC at 10, 20, 48, 72 days from preparation of the mixture.

The table below highlights the decrease in the concentration of active ingredient, said decrease in concentration of active ingredient being an indicator of the degradation of the same in time due to the degradation of a part of the initial BRODIFACOUM contained in the starting composition.

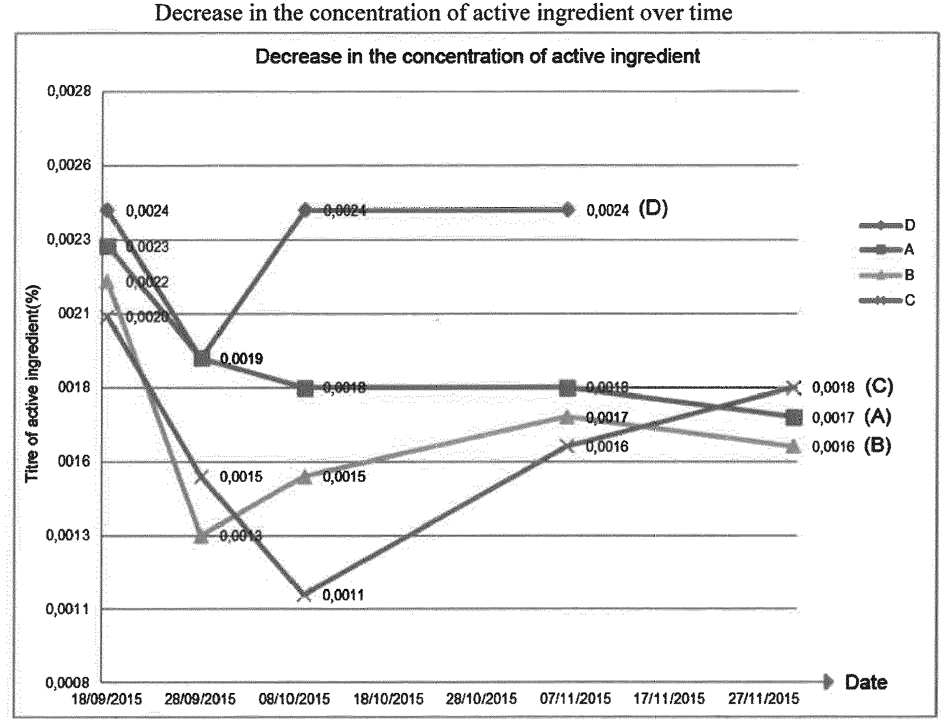

## Claims

1. Formulation for rodenticide bait having pre-established and controlled degradation of the active ingredient content in accordance with defined times in such a way as to have a persistence less than three weeks from bringing into use, said formulation comprising
- at least one coumarins or thiocoumarins-based ACTIVE INGREDIENT (A), dissolved in at least one carrier solvent, preferably a palatable one,
- a SOLID MATRIX (B) comprising at least one palatable substance;
- at least one solid organic ACID (C) soluble in water, able to increase the concentration of H+ ions when the water, in any form, comes into contact with said formulation;
- a solid BASIC SUBSTANCE (D), capable of developing compound of an acid nature when water, in any form, enters into contact with said formulation containing said acid (C), so as to create an acidic environment to promote the controlled decomposition of at least said active ingredient (A) in a time shorter than three weeks after bringing into use;
and optionally
- one or more CO-FORMULANTS,
wherein said basic substances (D) are calcium carbonate, sodium bicarbonate, sodium carbonate, potassium carbonate and potassium bicarbonate, able to generate CO₂,
wherein the quantities of acid (C) and of basic substance (D) are chosen so as to reach the value of acidity in which the active ingredient (A) decomposes completely;
said formulation further comprising one or more hygroscopic substances, preferably calcium hydroxide and calcium chloride.

2. Formulation for rodenticide bait having a controlled degradation according to claim 1, in the form of tablet, effervescent tablet, also multilayered, pellets or fresh paste, preferably effervescent tablet.

3. Formulation for rodenticide bait having a controlled degradation according to claim 1 or 2, wherein the active ingredients (A) are coumarins-based or thiocoumarins-based anticoagulants, in particular brodifacoum, bromadiolone, difenacoum and difethialone.

4. Formulation for rodenticide bait having a controlled degradation according to any one of the preceding claims, wherein said solid matrix (B) is generally formed by one or more solid substances such as
- adsorbing substances with a high value of surface area and porosity, particularly amorphous silica, bentonites, zeolites, kaolin, talc, and natural derivatives such as cellulose and maltodextrins;
- palatable attracting substances as starch, milk powder, various sugars, powdered fruit or vegetables, powders of ginger, turmeric, cocoa bean that also increase the stimulation of swallowing, wheat flour, wheat, mannitol, lactose;
- solid filler substances able to make processable said formulation in terms of fluidity, in particular silica, talc, starch, for example cornstarch, calcium silicate, cellulose, magnesium carbonate, magnesium oxide, magnesium silicate, lactose.

5. Formulation for rodenticide bait having controlled degradation according to any one of the preceding claims, wherein said acid (C) is citric acid, malic acid, tartaric acid, adipic acid, fumaric acid.

6. Formulation for rodenticide bait having a controlled degradation according to any one of the preceding claims, further comprising at least one substance (E), natural or artificial, which allows a more effective absorption of at least one of the anticoagulant active ingredients (A) of said formulation, preferably soy lecithin.

7. Formulation for rodenticide bait having a controlled degradation according to any one of the preceding claims, further comprising at least one substance (F) able to inhibit and slow the degradation of the active substance within the target organism, preferably selected from piperine, apigenin and bergamottin, or their combinations.

8. Formulation for rodenticide bait having controlled degradation according to any one of the preceding claims, wherein said co-formulants are selected from the group consisting of
- BINDERS such as carboxymethyl cellulose, Calcium Carbonate, Calcium Sulfate, fats, preferably in quantities equal to or less than 10% by weight for formulations in tablets and pellets, or in quantities equal to or lower than 30% for formulations in paste;
- bittering substances such as for example denatonium benzoate or denatonium saccharide, preferably in amounts ranging from 0.001 to 0.02% by weight;
- visible or ultraviolet colorants including titanium oxide, preferably present in amounts of between 0.01-0.5% by weight;
- Antioxidants such as BHT, BHA or mixtures thereof, in quantities preferably comprised between 0.01-0.5% by weight;
- emulsifying agents such as sodium isopropyl naphthalene sulfonate, sodium alkyl sulfate;
- preservatives against fungi, yeasts, bacteria, and the like, such as sorbic acid and bronopol, in quantities preferably comprised between 0.01-0.5% by weight;
- Flavour substances, in quantities preferably comprised between 0.01-0.5%;
- repellent agents for the other species;
- lubricating substances (G) able to make workable the formulation, such as magnesium stearate, stearic acid, sodium stearyl fumarate or hydrogenated vegetable oils, synthetic or vegetable waxes.

## Patentansprüche

1. Formulierung für Rodentizidköder mit vorher festgelegtem und kontrolliertem Abbau des Wirkstoffgehalts in Übereinstimmung mit definierten Zeiten derart, dass sie eine Haltbarkeit von weniger als drei Wochen ab dem Zeitpunkt der Verwendung aufweist, wobei die Formulierung umfasst:
- mindestens einen WIRKSTOFF (A) auf der Basis von Cumarinen oder Thiocumarinen, gelöst in mindestens einem Trägerlösungsmittel, vorzugsweise einem wohlschmeckenden,
- eine FESTE MATRIX (B), die mindestens eine schmackhafte Substanz enthält;
- mindestens eine feste, in Wasser lösliche organische SÄURE (C), die in der Lage ist, die Konzentration von H⁺-Ionen zu erhöhen, wenn das Wasser in irgendeiner Form mit der genannten Formulierung in Kontakt kommt;
- einen festen GRUNDSTOFF (D), der in der Lage ist, eine Verbindung saurer Natur zu entwickeln, wenn Wasser in irgendeiner Form mit der die Säure (C) enthaltenden Formulierung in Kontakt kommt, sodass ein saures Milieu geschaffen wird, um die kontrollierte Zersetzung zumindest des Wirkstoffs (A) in einer Zeit kürzer als drei Wochen nach Gebrauch zu fördern;
und optional
- ein oder mehrere CO-FORMULIERUNGEN,
wobei die Grundstoffe (D) Kalziumkarbonat, Natriumbikarbonat, Natriumkarbonat, Kaliumkarbonat und Kaliumbikarbonat sind, die CO2 erzeugen können,
wobei die Mengen der Säure (C) und des Grundstoffs (D) so gewählt werden, dass der Säurewert erreicht wird, bei dem sich der Wirkstoff (A) vollständig zersetzt;
wobei die Formulierung ferner eine oder mehrere hygroskopische Substanzen, vorzugsweise Calciumhydroxid und Calciumchlorid, enthält.

2. Formulierung für Rodentizid-Köder mit kontrolliertem Abbau nach Anspruch 1 in Form einer Tablette, Brausetablette, auch mehrschichtig, Pellets oder Frischpaste, vorzugsweise Brausetablette.

3. Formulierung für Rodentizidköder mit kontrolliertem Abbau nach Anspruch 1 oder 2, wobei die Wirkstoffe (A) Antikoagulantien auf Basis von Cumarinen oder Thiocumarinen, insbesondere Brodifacoum, Bromadiolon, Difenacoum und Difethialon, sind.

4. Formulierung für Rodentizidköder mit einem kontrollierten Abbau nach einem der vorhergehenden Ansprüche, wobei die feste Matrix (B) im Allgemeinen durch eine oder mehrere feste Substanzen gebildet wird, wie
- adsorbierende Substanzen mit einem hohen Wert der Oberfläche und Porosität, insbesondere amorphe Kieselsäure, Bentonite, Zeolithe, Kaolin, Talkum und natürliche Derivate, wie Zellulose und Maltodextrine;
- schmackhafte Lockstoffe, wie Stärke, Milchpulver, verschiedene Zucker, Obst-
oder Gemüsepulver, Ingwer-, Kurkuma-, Kakaobohnenpulver, die auch die Stimulation des Schluckens erhöhen, Weizenmehl, Weizen, Mannitol, Laktose;
- feste Füllstoffe, die in der Lage sind, die genannte Formulierung in Bezug auf die Fließfähigkeit verarbeitbar zu machen, insbesondere Kieselsäure, Talkum, Stärke, zum Beispiel Maisstärke, Kalziumsilikat, Zellulose, Magnesiumcarbonat, Magnesiumoxid, Magnesiumsilikat, Laktose.

5. Formulierung für Rodentizidköder mit kontrolliertem Abbau nach einem der vorstehenden Ansprüche, wobei die Säure (C) Zitronensäure, Apfelsäure, Weinsäure, Adipinsäure, Fumarsäure ist.

6. Formulierung für Rodentizidköder mit kontrolliertem Abbau nach einem der vorhergehenden Ansprüche, weiterhin umfassend mindestens eine Substanz (E), natürlich oder künstlich, die eine wirksamere Absorption von mindestens einem der gerinnungshemmenden Wirkstoffe (A) der Formulierung, vorzugsweise Sojalecithin, ermöglicht.

7. Formulierung für Rodentizidköder mit kontrolliertem Abbau nach einem der vorhergehenden Ansprüche, weiterhin umfassend mindestens eine Substanz (F), die in der Lage ist, den Abbau der aktiven Substanz innerhalb des Zielorganismus zu hemmen und zu verlangsamen, vorzugsweise ausgewählt aus Piperin, Apigenin und Bergamottin oder deren Kombinationen.

8. Formulierung für Rodentizidköder mit kontrolliertem Abbau nach einem der vorhergehenden Ansprüche, wobei die Co-Formulierungen ausgewählt sind aus der Gruppe bestehend aus
- BINDEMITTELN, wie zum Beispiel Carboxymethylcellulose, Calciumcarbonat, Calciumsulfat, Fette, vorzugsweise in Mengen von kleiner oder gleich 10 Gew.-% für Formulierungen in Tabletten und Pellets oder in Mengen von kleiner oder gleich 30 % für Formulierungen in Paste;
- Bitterstoffe, wie z.B. Denatoniumbenzoat oder Denatoniumsaccharid, vorzugsweise in Mengen von 0,001 bis 0,02 Gew.-%;
- sichtbare oder ultraviolette Farbstoffe, einschließlich Titanoxid, die vorzugsweise in Mengen zwischen 0,01-0,5 Gew.-% vorhanden sind;
- Antioxidantien, wie BHT, BHA oder Mischungen davon, in Mengen von vorzugsweise zwischen 0,01-0,5 Gew.-%;
- Emulgatoren, wie z.B. Natriumisopropylnaphthalinsulfonat, Natriumalkylsulfat;
- Konservierungsmittel gegen Pilze, Hefen, Bakterien und dergleichen, wie Sorbinsäure und Bronopol, in Mengen von vorzugsweise zwischen 0,01-0,5 Gewichts-%;
- Aromastoffe, vorzugsweise in Mengen zwischen 0,01-0,5 %;
- Abwehrmittel für die anderen Arten;
- Gleitsubstanzen (G), die in der Lage sind, die Formulierung praktikabel zu machen, wie z.B. Magnesiumstearat, Stearinsäure, Natriumstearylfumarat oder hydrierte Pflanzenöle, synthetische oder pflanzliche Wachse.

## Revendications

1. Formulation pour appât rodenticide ayant une dégradation préétablie et contrôlée de la teneur en principe actif selon des délais définis d'une manière à avoir une persistance inférieure à trois semaines à partir de la mise en service, ladite formulation comprenant
- au moins un principe actif à base de coumarines ou de thiocoumarines (A), dissous dans au moins un solvant porteur, de préférence un solvant au goût agréable,
- une matrice solide (B) comprenant au moins une substance au goût agréable ;
- au moins un acide organique solide (C) soluble dans l'eau, capable d'augmenter la concentration des ions H⁺ lorsque l'eau, sous une forme quelconque, entre en contact avec ladite formulation ;
- une substance basique solide (D), capable de développer un composé d'une nature acide lorsque l'eau, sous une forme quelconque, vient en contact avec ladite formulation contenant ledit acide (C), de manière à créer un environnement acide afin de favoriser la décomposition contrôlée dudit au moins principe actif (A) dans un délai inférieur à trois semaines après la mise en service ;
et éventuellement
- un ou plusieurs coformulants,
dans laquelle lesdites substances basiques (D) sont le carbonate de calcium, le bicarbonate de sodium, le carbonate de sodium, le carbonate de potassium et le bicarbonate de potassium, capable de générer du CO₂,
dans laquelle les quantités de substances acides (C) et de substances basiques (D) sont choisies de manière à obtenir la valeur d'acidité dans laquelle le principe actif (A) se décompose complètement ;
ladite formulation comprenant en outre une ou plusieurs substances hygroscopiques, de préférence de l'hydroxyde de calcium et du chlorure de calcium.

2. Formulation pour appât rodenticide ayant une dégradation contrôlée selon la revendication 1, sous forme d'un comprimé, d'un comprimé effervescent, également sous forme de pellets ou d'une pâte fraîche multicouche, de préférence sous forme d'un comprimé effervescent.

3. Formulation pour appât rodenticide ayant une dégradation contrôlée selon la revendication 1 ou la revendication 2, dans laquelle les principes actifs (A) sont des anticoagulants à base de coumarines ou de thiocoumarines, en particulier le brodifacoum, la bromadiolone, le difénacoum et la diféthialone.

4. Formulation pour appât rodenticide ayant une dégradation contrôlée selon l'une quelconque des revendications précédentes, dans laquelle ladite matrice solide (B) est généralement formée par une ou plusieurs substances solides telles que
- les substances absorbantes avec une valeur élevée de surface et de porosité, particulièrement la silice amorphe, les bentonites, les zéolites, le kaolin, le talc, et les dérivés naturels tels que la cellulose et les maltodextrines ;
- des substances d'attraction au goût agréable telles que l'amidon, le lait en poudre, les sucres divers, les fruits ou légumes en poudre, les poudres de gingembre, le curcuma, la fève de cacao qui augmentent également la stimulation de la déglutition, la farine de blé, le blé, le mannitol, le lactose ;
- des substances de charge solides en mesure de rendre transformable ladite formulation en termes de fluidité, en particulier la silice, le talc, l'amidon, par exemple l'amidon de maïs, le silicate de calcium, la cellulose, le carbonate de magnésium, l'oxyde de magnésium, le silicate de magnésium, le lactose.

5. Formulation pour appât rodenticide ayant une dégradation contrôlée selon l'une quelconque des revendications précédentes, dans laquelle ledit acide (C) est l'acide citrique, l'acide malique, l'acide tartarique, l'acide adipique, l'acide fumarique.

6. Formulation pour appât rodenticide ayant une dégradation contrôlée selon l'une quelconque des revendications précédentes, comprenant en outre au moins une substance (E), naturelle ou artificielle, qui permet une absorption plus efficace d'au moins un ingrédient parmi les principes actifs anticoagulants (A) de ladite formulation, de préférence la lécithine de soja.

7. Formulation pour appât rodenticide ayant une dégradation contrôlée selon l'une quelconque des revendications précédentes, comprenant en outre au moins une substance (F) en mesure d'inhiber et de ralentir la dégradation de la substance active à l'intérieur de l'organisme cible, de préférence choisie parmi la pipérine, l'apigénine et la bergamottine, ou leurs combinaisons.

8. Formulation pour appât rodenticide ayant une dégradation contrôlée selon l'une quelconque des revendications précédentes, dans laquelle lesdits coformulants sont choisis dans le groupe constitué par
- les liants tels que la carboxyméthyl cellulose, le carbonate de calcium, le sulfate de calcium, les graisses, de préférence en quantités inférieures ou égales à 10 % en poids pour les formulations sous forme de comprimés et de pellets, ou en des quantités inférieures ou égales à 30 % pour des formulations sous forme de pâte ;
- des substances amères telles que par exemple le benzoate de dénatonium ou le saccharide de dénatonium, de préférence en des quantités comprises entre 0,001 et 0,02 % en poids ;
- des colorants visibles ou ultraviolets comprenant l'oxyde de titane, de préférence présente en des quantités comprises entre 0,01 et 0,5 % en poids ;
- des antioxydants tels que le BHT, le BHA ou les mélanges de ceux-ci, en des quantités de préférence comprises entre 0,01 et 0,5 % en poids ;
- des agents émulsifiants tels que le sulfonate de naphtalène isopropylique de sodium, le sulfate alkylique de sodium ;
- des conservateurs contre les champignons, les levures, les bactéries et similaires, tels que l'acide formique et le bronopol, en des quantités de préférence comprises entre 0,01 et 0,5 % en poids ;
- des substances aromatisantes, en des quantités de préférence comprises entre 0,01 et 0,5 % ;
- des agents répulsifs pour les autres espèces ;
- des substances de lubrification (G) en mesure de procéder à la réalisation de la formulation, telles que le stéarate de magnésium, l'acide stéarique, le fumarate de stéaryle de sodium ou les huiles végétales hydrogénées, les cires synthétiques ou végétales.
